# EUROPEAN PATENT APPLICATION

(11) **EP 3 934 287 A1**
(43) Date of publication of application: **05.01.2022**
(21) Application number: 20850519.8
(22) Date of filing: 20.06.2020
(51) Int. Cl.: H04W 4/24

(54) **CHARGING METHOD, DEVICE, AND SYSTEM**

(30) Priority: 02.08.2019 CN 201910713756
(71) Applicant: Huawei Technologies Co., Ltd., Shenzhen, Guangdong 518129 (CN)
(72) Inventor: CHAI, Xiaoqian, Shenzhen, Guangdong 518129 (CN)
(74) Representative: MERH-IP Matias Erny Reichl Hoffmann Patentanwälte PartG mbB
(86) International application number: PCT/CN2020/097292
(87) International publication number: WO 2021/022916

(57) **Abstract**

Embodiments of this application disclose a charging method and a related product. A charging function CHF apparatus receives a first charging request sent by a charging trigger function CTF apparatus, where the first charging request carries event charging information. Then, the CHF apparatus determines a first event charging processing mode based on the event charging information, and processes the first charging request according to the first event charging processing mode. According to the method, the CHF apparatus may determine the first event charging processing mode based on the first charging request, and perform event charging processing. Therefore, charging can be accurately and efficiently performed on an event charging service.

## Description

This application claims priority to Chinese Patent Application No. 201910713756.3, filed with the Chinese Patent Office on August 2, 2019 and entitled "CHARGING METHOD, APPARATUS, AND SYSTEM", which is incorporated herein by reference in its entirety.

### TECHNICAL FIELD

This application relates to the field of communications technologies, and in particular, to a charging method, apparatus, and system.

### BACKGROUND

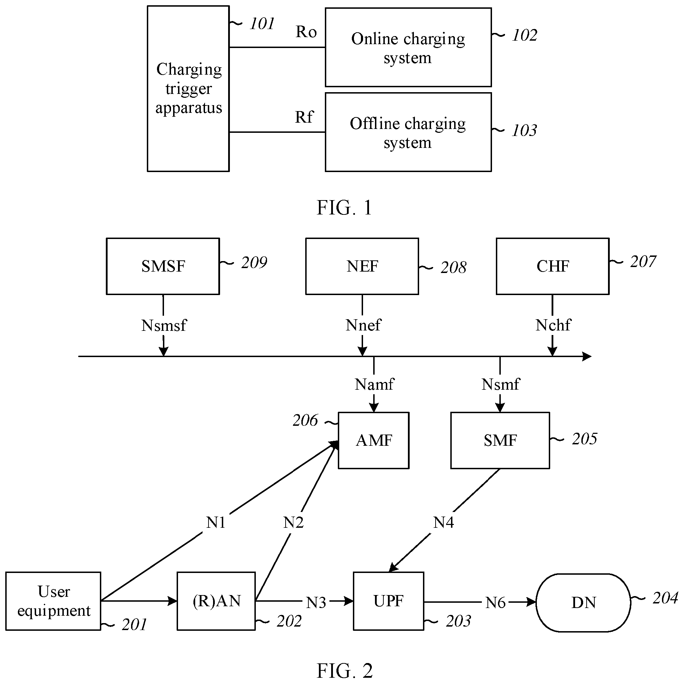

Currently, in a 4G communications system, an online charging service and an offline charging service are charged by using different charging systems. As shown in FIG. 1, a charging trigger function (charging trigger function) apparatus 101 in a system 100 communicates with an online charging system 102 through an Ro interface, and communicates with an offline charging system 103 through an Rf interface. The online charging system 102 is configured to perform charging on the online charging service, and the offline charging system 103 is configured to perform charging on the offline charging service. After determining online charging or offline charging, the CTF apparatus initiates a diameter charging request to the online charging system 102 or the offline charging system 103. The online charging system 102 or the offline charging system 103 may perform corresponding charging processing based on a charging command and a request type in the diameter charging request.

In a 5G communications system, a service-based online/offline converged charging message is used, and resource reservation and use information reporting are implemented based on a rating group. When use information is to be reported, a carried use quota management indication indicates whether the use information is use information with a quota, to implement reporting of use information with a quota and reporting of use information without a quota. The quota is a quota granted by a charging system to a CTF in advance. In other words, the use quota management indication indicates whether the quota is applied for from the charging system in advance and is granted by the charging system based on the application.

The online/offline converged charging message used in the existing 5G communications system supports session-based traffic and duration resource reservation and usage reporting. However, the current converged charging system cannot accurately and efficiently implement event charging.

### SUMMARY

Embodiments of this application provide a charging method, apparatus, and system, to implement charging for an event charging service.

According to a first aspect, an embodiment of this application provides a charging method. The method includes: A CHF apparatus receives a first charging request sent by a charging trigger function CTF apparatus, where the first charging request carries event charging information. Then, the CHF apparatus determines a first event charging processing mode based on the event charging information, and processes the first charging request according to the first event charging processing mode. According to the method, the CHF apparatus may determine the first event charging processing mode based on the first charging request, and perform event charging processing. Therefore, charging can be accurately and efficiently performed on an event charging service.

In a possible implementation, the event charging information includes indication information indicating event charging, and before determining the first event charging processing mode, the CHF apparatus determines, based on the event charging indication information, that the first charging request is a charging request for an event service. Therefore, the CHF apparatus may accurately determine the request for the event charging service, and then perform subsequent processing. Therefore, charging can be accurately and efficiently performed on the event charging service.

In a possible implementation, the first charging request is a create request for a first event charging resource, and the event charging information further includes an indication parameter of one-time event charging. The CHF apparatus determines, based on the indication parameter of one-time event charging, that the first charging request is a one-time event charging request, creates the first event charging resource based on the first charging request, and determines that the first event charging resource has no second charging request. Alternatively, the CHF determines, based on the indication parameter of one-time event charging, that the first charging request is a non-one-time event charging request, creates the first event charging resource based on the first charging request, and determines that the first event charging resource has a second charging request. The CHF apparatus determines whether there is a subsequent third charging request, to perform subsequent processing. For example, if there is no subsequent charging request, the first event charging resource is released after the charging processing is completed. Alternatively, if there is a subsequent charging request, the first event charging resource is retained.

In a possible implementation, the event charging information further includes the first event charging processing mode, and the event charging processing mode is direct deduction, offline event reporting, or event quota application. The CHF apparatus may directly obtain the event charging processing mode from the first charging request, to improve processing efficiency.

In a possible implementation, the first charging request carries a user identifier, the event charging information further includes a parameter indicating a service type. That the CHF apparatus determines a first event charging processing mode based on the event charging information includes: The CHF apparatus obtains user information based on the user identifier, and determines the first event charging processing mode based on the indication information indicating event charging, the user information, and the parameter indicating the service type, where the first event charging processing mode is direct deduction, offline event reporting, or event quota application. The CHF apparatus may directly obtain the event charging processing mode from the first charging request, to improve processing efficiency.

In a possible implementation, after determining, based on the indication parameter of one-time event charging, that the first charging request is a non-one-time event charging request, that the CHF apparatus determines an event charging processing mode based on the event charging information includes: determining that the first event charging processing mode is event quota application.

In a possible implementation, the first event charging processing mode is the direct deduction, and that the CHF apparatus processes the first charging request according to the first event charging processing mode includes: performing rating based on the first charging request, and performing deduction from an account balance of a user based on a rating result.

In a possible implementation, the first event charging processing mode is the offline event reporting, and that the CHF apparatus processes the first charging request according to the first event charging processing mode includes: generating an event charging data record based on the first charging request.

In a possible implementation, the first event charging processing mode is the event quota application, and that the CHF apparatus processes the first charging request according to the first event charging processing mode includes: performing rating based on the event charging information, and granting an event quota based on the rating.

In a possible implementation, the CHF apparatus further returns a first charging response for the first charging request to the CTF apparatus, where the first charging response carries the determined first event charging processing mode.

In a possible implementation, the event charging processing mode is the direct deduction, and after processing the first charging request, the CHF apparatus receives a second charging request for the event charging service, where the second charging request includes a second event charging processing mode and an identifier of the first event charging resource, the second event charging processing mode is refund, and is indication information used to indicate to refund a deduction amount in the direct deduction performed by using the first charging request, and the identifier of the first event charging resource is obtained from a charging response for the first charging request. In addition, the CHF apparatus determines, based on the identifier of the first event charging resource, the deduction amount in the direct deduction performed by using the first charging request, and refunds the deduction amount to the account balance of the user. According to the method, in the event charging service, a fee is deducted because the event charging service fails to be performed, to improve charging accuracy and user experience.

In a possible implementation, the second charging request is a create request for a second event charging resource, and the second charging request carries an indication parameter of one-time event charging. The CHF apparatus further creates the second event charging resource based on the second charging request.

In a possible implementation, the second charging request is an update request for the first event charging resource, and the CHF apparatus further releases the first event charging resource based on the second charging request.

In a possible implementation, the second charging request is a release request for the first event charging resource, and the CHF apparatus further releases the first event charging resource based on the second charging request.

In a possible implementation, the first charging request further includes a retransmission determining parameter, and after determining, based on the retransmission determining parameter, that the first charging request is not a retransmitted create request for the first event charging resource, the CHF apparatus further creates the first event charging resource. According to this method, the CHF may further determine whether a resource create request is a retransmission request, to perform accurate charging processing.

In a possible implementation, the second charging request further includes a retransmission determining parameter, and after determining, based on the retransmission determining parameter, that the second charging request is not a retransmitted create request for the second event charging resource, the CHF apparatus further creates the second event charging resource. According to this method, the CHF may further determine whether a resource create request is a retransmission request, to perform accurate charging processing.

In a possible implementation, the first charging request further carries an event identifier and/or an event quantity, and the processing the first charging request includes: processing the charging request based on the event identifier and/or the event quantity. According to this method, occurrence of one or more events may represent in one charging request, so as to avoid performing charging processing each time when a plurality of event charging services occur. In this way, a charging process is simplified.

According to a second aspect, an embodiment of this application provides a charging method. The method includes: A CTF apparatus determines that a charging event of an event charging service occurs, and sends a first charging request to a charging function CHF apparatus, where the first charging request carries event charging information, and the event charging information is used to determine an event charging processing mode. The CTF apparatus receives a first charging response that is of the first charging request and that is sent by the CHF apparatus, where the first charging response includes a result of processing the first charging request according to the determined event charging processing mode. According to this method, the CTF apparatus carries the event charging information in the first charging request, so that the CHF apparatus may determine the first event charging processing mode based on the first charging request, and perform event charging processing. Therefore, charging can be accurately and efficiently performed on the event charging service.

In a possible implementation, the first charging response further includes the event charging processing mode determined by the CHF.

In a possible implementation, the first event charging processing mode is direct deduction, the first charging response includes an identifier of the first event charging resource created based on the first charging request, and the CTF apparatus receives a first charging response sent by the CHF apparatus. Then, the CTF apparatus further determines that the event charging service fails to be performed, and sends a second charging request for the event charging service, where the second charging request includes indication information used to indicate to refund a deduction amount in the direct deduction performed by using the first charging request and the identifier of the first event charging resource, and the identifier of the first event charging resource is used to determine the deduction amount in the direct deduction performed by using the first charging request. According to the method, in the event charging service, a fee is deducted because the event charging service fails to be performed, to improve charging accuracy and user experience.

In a possible implementation, the second charging request is a create request for a second event charging resource, and the second charging request further carries an indication parameter of one-time event charging, or the second charging request message is an update request for the first event charging resource or a release request for the first event charging resource.

In a possible implementation, the first charging request or the second charging request further includes a retransmission determining parameter, and the retransmission determining parameter is used to determine that the first charging request is not a retransmitted create request for an event charging resource; and/or
the second charging request further includes a retransmission determining parameter, and the retransmission determining parameter is used to determine that the second charging request is not a retransmitted create request for an event charging resource. According to this method, the CHF may further determine whether a resource create request is a retransmission request, to perform accurate charging processing.

In a possible implementation, the CTF apparatus determines a quantity of times of occurrence of a service event, and the charging request further carries an event identifier and an event quantity. According to this method, occurrence of one or more events may represent in one charging request, so as to avoid performing charging processing each time when a plurality of event charging services occur. In this way, a charging process is simplified.

According to a third aspect, a CHF apparatus is provided. The apparatus has functions of implementing the CHF apparatus in the first aspect and the second aspect. The function may be implemented by hardware, or may be implemented by hardware executing corresponding software. The hardware or the software includes one or more modules corresponding to the function.

According to a fourth aspect, a CTF apparatus is provided. The apparatus has functions of implementing the CTF apparatus in the first aspect and the second aspect. The function may be implemented by hardware, or may be implemented by hardware executing corresponding software. The hardware or the software includes one or more modules corresponding to the function.

According to a fifth aspect, an embodiment of this application provides a charging trigger function apparatus, including a non-volatile memory and a processor that are coupled to each other. The processor invokes program code stored in the memory to perform some or all steps of any method in the first aspect.

According to a sixth aspect, an embodiment of this application provides a charging function apparatus, including a non-volatile memory and a processor that are coupled to each other. The processor invokes program code stored in the memory to perform some or all steps of any method in the second aspect.

According to a seventh aspect, an embodiment of this application provides a computer-readable storage medium. The computer-readable storage medium stores program code, and the program code includes instructions used to perform some or all steps of any method in the first aspect.

According to an eighth aspect, an embodiment of this application provides a computer-readable storage medium. The computer-readable storage medium stores program code, and the program code includes instructions used to perform some or all steps of any method in the second aspect.

According to a ninth aspect, an embodiment of this application provides a computer program product. When the computer program product is run on a computer, the computer performs some or all steps of any method in the first aspect.

According to a tenth aspect, an embodiment of this application provides a computer program product. When the computer program product is run on a computer, the computer performs some or all steps of any method in the first aspect.

According to an eleventh aspect, an embodiment of this application provides a charging system, including the charging function apparatus in the third aspect and the charging trigger function apparatus in the fourth aspect.

It should be understood that, technical solutions in the second to the eleventh aspects of this application are consistent with that of the first aspect. Beneficial effects achieved by these aspects and corresponding feasible implementations are similar, and details are not described again.

### BRIEF DESCRIPTION OF DRAWINGS

To describe the technical solutions in the embodiments of this application or in the background more clearly, the following describes the accompanying drawings for describing the embodiments of this application or the background.
FIG. 1 is a schematic block diagram of a charging system in the current technology;
FIG. 2 is a schematic block diagram of a network architecture according to an embodiment of this application;
FIG. 3 is a schematic block diagram of a charging system according to an embodiment of this application;
FIG. 4 is a schematic block diagram of a charging framework according to an embodiment of this application;
FIG. 5 is a flowchart of a charging method according to an embodiment of this application;
FIG. 6 is a flowchart of a charging method according to an embodiment of this application;
FIG. 7 is a flowchart of a charging method according to an embodiment of this application;
FIG. 8 is a schematic block diagram of a charging function apparatus according to an embodiment of this application;
FIG. 9 is a schematic block diagram of a charging trigger function apparatus according to an embodiment of this application; and
FIG. 10 is a schematic block diagram of a charging device according to an embodiment of this application.

### DESCRIPTION OF EMBODIMENTS

The following describes embodiments of this application with reference to the accompanying drawings in the embodiments of this application.

FIG. 2 is a schematic diagram of a possible network architecture to which an embodiment of this application is applicable. The network architecture 200 is a fifth generation mobile communication technology (the 5th Generation mobile communication technology, 5G) network architecture. The 5G architecture may include a piece of user equipment 201, a radio access network (radio access network, RAN) 202, an access mobility management function (access and mobility management function, AMF) apparatus 206, a session management function (session management function, SMF) apparatus 205, a user plane function (user plane function, UPF) apparatus 203, a network exposure function (Network Exposure Function, NEF) apparatus 208, a short message service function (Short Message Service Function, SMSF) apparatus 209, a data network (data network, DN) 204, and a charging function (charging function, CHF) apparatus 207. Moreover, in addition to network elements shown in FIG. 2, the architecture in this embodiment of this application may further include another network element or function that uses event charging, for example, an internet of things message gateway. Communication between the functional modules in FIG. 2 may be implemented by establishing a connection through a next generation (next generation, NG) interface or a service-based interface (service based interface, SBI). For example, a RAN device may establish a control plane signaling connection to the AMF through an NG interface 2 (N2 for short), and an NEF device may provide an external service through an SBI interface Nnef.

The user equipment is a device having a wireless transceiver function. The user equipment may be deployed on land, including an indoor device, an outdoor device, a handheld device, or a vehicle-mounted device; or may be deployed on a water surface (for example, on a ship); or may be deployed in the air (for example, on a plane, a balloon, or a satellite).

The following describes the technical solutions in embodiments of this application with reference to the accompanying drawings in the embodiments of this application. In the descriptions of this application, unless otherwise specified, "a plurality of' means two or more than two. In addition, for convenience of clear description of the technical solutions in the embodiments of this application, in the embodiments of this application, terms such as "first" and "second" are used to distinguish between same objects or similar objects whose functions and purposes are basically the same. A person skilled in the art may understand that the terms, such as "first" and "second", are not intended to limit a quantity or an execution sequence; and the terms, such as "first" and "second", do not indicate a definite difference. "A and/or B" in the present invention may be explained as any one of A or B, or include A and B.

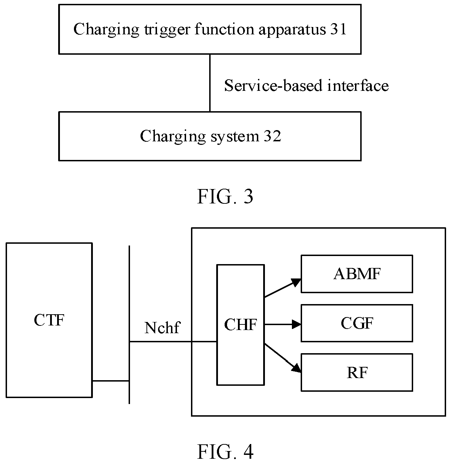

FIG. 3 is a schematic diagram of a charging architecture 300 according to an embodiment of this application. The charging architecture 300 includes a charging trigger function (charging trigger function, CTF) apparatus 101 and a charging system 31. The charging trigger function apparatus 101 and the charging system 31 may communicate with each other through a service-based interface. The service-based interface refers to a resource-based capability exposure interface, such as RESTful and remote procedure call (remote procedure call, RPC). With reference to the network architecture in FIG. 2, the CTF apparatus 101 may be disposed in the SMF apparatus 205. In other words, the SMF apparatus 205 integrates a function of the CTF apparatus 101. The charging system 31 includes a charging function (charging function, CHF) apparatus 207. The CHF apparatus 207 may perform online (online) charging and offline (offline) charging. That is, the charging system 31 may be a converged charging system. The charging system 31 further includes an account balance management function (account balance management function, ABMF) apparatus and a rating function (rating function, RF) apparatus that are required when charging is performed. The ABMF apparatus is configured to store and manage an account of a user, and the RF apparatus is configured to perform rating on use information of a service. In addition to the charging trigger function apparatus 101 and the charging system 31 shown in FIG. 3, the charging architecture in this embodiment of this application may further include a billing (billing) apparatus. The billing apparatus and the charging system 31 may communicate with each other by using a charging gateway function (charging gateway function, CGF) apparatus. The CGF apparatus may be integrated into the charging system as a part of the charging system, or may be integrated into the bill apparatus as a part of the bill apparatus, or may exist as an independent network element. The following content is further described in detail.

The charging trigger function apparatus 101 generates a charging start request, and the charging system 31 processes the charging start request. In this embodiment of this application, the charging trigger function apparatus 101 may also be considered as a client, and the charging system 31 may be considered as a server. The charging trigger function apparatus 101 and the charging system 31 may include one or more processors and a memory coupled to the one or more processors. The memory may include but is not limited to a RAM, a ROM, an EEPROM, a flash memory, or any other medium that can be used to store desired program code in a form of instructions or a data structure accessible to a computer, as described in this specification.

FIG. 4 is a specific implementation of the charging architecture in FIG. 3. The CHF apparatus 207 may provide an external service through the service-based interface Restful. A name of the interface is Nchf, and the CTF apparatus 101 may access the CHF apparatus 207 through the interface Nchf. The charging system includes the CHF apparatus 207, an ABMF apparatus 210, an RF apparatus 212, and a CGF apparatus 211.

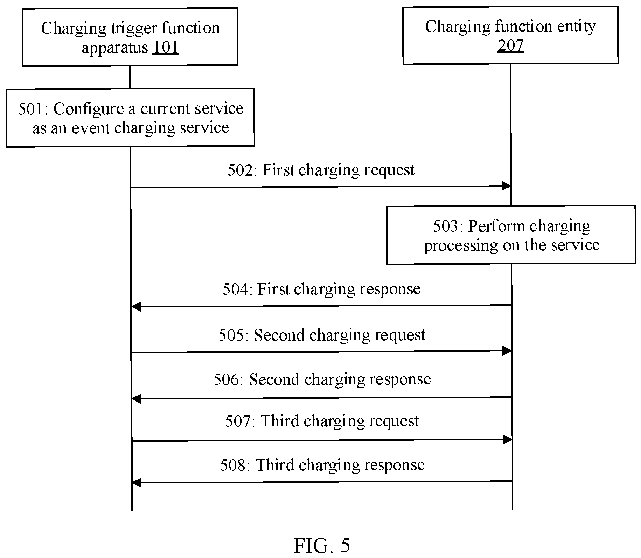

FIG. 5 is a schematic flowchart of a charging method 500 according to this application. The method 500 may be applied to the network architecture in FIG. 2, and the charging architecture shown in FIG. 3 and FIG. 4. Certainly, the method 500 may also be applied to another communication scenario. This is not limited in the embodiments of this application. As shown in FIG. 5, the method 500 includes the following content.

Step 501: Configure a current service as an event charging service and configure a charging rule of the service in a CTF apparatus 101.

If the CTF apparatus 101 is disposed in an SMF apparatus 205, in step 501, the event charging service and the charging rule may be dynamically configured by a PCF in the CTF apparatus 101 by delivering a policy, or may be preconfigured in the CTF apparatus 101. Optionally, if the CTF apparatus 101 is located in another network function apparatus, the charging rule of the event charging service is preconfigured in the CTF apparatus 101. An operator may configure a service charging rule in the CTF apparatus 101 to indicate that the service is the event charging service. The service charging rule further includes a reporting condition, and/or a charging processing mode of the event charging service. The charging processing mode includes: (1) direct deduction, (2) reservation-based event charging (including quota application and quota use reporting), (3) offline event reporting, (4) refund, and the like.

The direct deduction means that a CHF apparatus 207 performs rating based on a charging request reported by the CTF apparatus 101, and performs deduction from an account balance of a user based on a rating result. The offline event reporting means that the CHF apparatus 207 generates an event charging data record (Charging Data Record, CDR) based on the charging request reported by the CTF apparatus 101, and the CDR is also referred to as an event charging bill. The event quota application means that the CHF apparatus 207 performs rating based on the charging request reported by the CTF apparatus 101, and reserves a resource in the account balance (that is, grants a quota to the user). The quota use reporting means that use information with a granted quota is reported when the service meets charging reporting. The refund means that, for an event charging service that the direct deduction is performed, if the event charging service fails to be performed, a deduction amount in the direct deduction is refunded.

In the charging processing mode, an event charging processing mode for a first charging request for a resource is referred to as a first event charging processing mode. The first event charging processing mode includes: direct deduction, event quota application, or offline event reporting. An event charging processing mode for a second charging request is referred to as a second event charging processing mode. The second event charging processing mode includes: refund.

In the charging processing mode, the first charging request is a create request for a first event charging resource, and is used to request a charging system to create the first event charging resource. The second charging request is a create request for a second event charging resource, and is used to request the charging system to create the second event charging resource, or the second charging request is an update request for the first event charging resource, and is used to request the charging system to update the first event charging resource, or the second charging request is a release request for the first event charging resource, and is used to request the charging system to release the first event charging resource after charging data corresponding to the first event charging resource is updated.

For example, the charging request carries an event sender and receiver, an event occurrence time, and/or an event content size.

Step 502: The CTF apparatus 101 sends the first charging request to the CHF apparatus 207, where the first charging request carries event charging information.

The CTF apparatus 101 monitors use of the event charging service, and determines that a charging event of the event charging service occurs. The charging event is an event that needs to be charged, and is a charging event that triggers charging reporting. The CHF apparatus 207 generates the first charging request according to the configured service charging rule. The first charging request is the create request for the first event charging resource, and is sent to the CHF apparatus 207. If the CTF apparatus 101 is located in the SMF apparatus 205, that the charging event occurs may be that a new PDU session is established. If the CTF apparatus 101 is located in another function apparatus of the system, that the charging event occurs may be that the CTF apparatus 101 receives an invocation message of a network capability API or returns an invocation response for a network capability API.

The event charging information includes indication information indicating event charging, and is used to determine that the first charging request is a charging request for an event service. The indication information indicating event charging may be a dedicated identifier, or may be any event charging parameter (for example, an event service identifier, an indication parameter of one-time event charging, an indication parameter of non-one-time event charging, and an event charging processing mode).

The event charging information further includes an indication parameter of one-time event charging or an indication parameter of non-one-time event charging. The indication parameter of one-time event charging indicates that after the first event charging resource is created based on the first charging request, the first event charging resource has no subsequent charging request.

The resource event charging resource creation may further carry the first event charging processing mode. The first event charging processing mode may be direct deduction, event quota application, or offline event reporting. In addition, the resource event charging resource creation may further carry one or more of an event identifier, an event quantity, a retransmission determining parameter, event details, and the like. The event quantity indicates a quantity of times of occurrence of the event. The event identifier indicates a service event, for example, indicates that the service event is API invocation or SMS sending.

Step 503: The CHF apparatus 207 performs charging processing on the event charging service based on the first charging request.

For example, when the first charging request is the create request for the first event charging resource, the CHF apparatus 207 creates the first event charging resource for the first charging request, and allocates a resource identifier to the first event charging resource.

Specifically, the CHF apparatus 207 further needs to determine whether the first charging request is one-time event charging, and if the CHF apparatus 207 determines that the first charging request is a one-time event charging request, the CHF apparatus 207 determines that the first event charging resource has no subsequent charging request. Therefore, after creating the charging resource and performing charging processing based on the first charging request, the CHF apparatus 207 no longer retains a context of the first event charging resource, for example, releases the first event charging resource or stores the first event charging resource in a database. Alternatively, if the CHF apparatus 207 determines that the first charging request is a non-one-time event charging request, the CHF apparatus 207 creates the first event charging resource based on the first charging request, determines that the first event charging resource has a subsequent charging request to release the first event charging resource, and retains a context of the first event charging resource, so that the subsequent charging request can be processed. A specific method for determining, by the CHF apparatus 207, whether the first charging request is the one-time event charging includes: If the event charging information further includes the indication parameter of one-time event charging, the CHF apparatus 207 determines, based on the indication parameter of one-time event charging, that the first charging request is a one-time event charging request or a non-one-time charging request. If the first charging request does not carry the parameter of one-time event charging but carries information for determining the charging processing mode, the CHF apparatus 207 further determines, according to the determined charging processing mode, whether the first charging request is a one-time event charging request. For example, if the determined event charging processing mode is direct deduction or offline event reporting, the CHF apparatus 207 determines that the first charging request is a one-time event charging request. If the determined event charging processing mode is resource reservation, the CHF apparatus 207 determines that the first charging request is a non-one-time event charging request. If the event charging information further includes the event charging processing mode, the event charging processing mode is direct deduction, offline event reporting, or event quota application. The CHF apparatus 207 may perform direct deduction, offline event reporting, or event quota application on a service according to the event charging processing mode carried in the resource event charging resource creation.

If the event charging information does not include the first event charging processing mode, the CHF apparatus 207 may determine the first event charging processing mode based on the first charging request, and process the first charging request according to the determined first event charging processing mode. The determined first event charging processing mode may be: the direct deduction, the event quota application, or the offline event reporting. For example, the CHF apparatus 207 may obtain user information based on a user identifier carried in the first charging request, and determine the event charging processing mode based on the obtained user information. Alternatively, the CHF apparatus 207 may determine the event charging processing mode based on a parameter of a service type in the first charging request, for example, the service type of API invocation. Alternatively, the CHF apparatus 207 may determine the event charging processing mode based on a parameter of a service status in the first charging request. The CHF apparatus 207 may alternatively determine the event charging processing mode with reference to the foregoing several pieces of information, for example, with reference to the user information and the service type.

If the event charging information does not include the event charging processing mode, the CHF apparatus 207 may determine, based on the event charging indication information, that the first charging request is a charging request for the event service, obtain the user information based on the user identifier in the first charging request, and determine the event charging processing mode based on the user information. Alternatively, The CHF apparatus 207 may determine the event charging processing mode based on the parameter of the service type or the parameter of the service status that is included in the event charging information. The CHF apparatus 207 may alternatively determine the event charging processing mode with reference to the foregoing several pieces of information, for example, with reference to the user information and the service type.

If the event charging information does not include the event charging processing mode, the CHF apparatus 207 may further determine the event charging processing mode based on the indication parameter of non-one-time event charging that is included in the event charging information. Specifically, if the event charging information includes the indication parameter of non-one-time event charging, the CHF apparatus 207 determines that the first event charging processing mode is the event quota application.

The event charging information further includes a retransmission determining parameter. Before creating the first event charging resource for the first charging request, the CHF apparatus 207 creates the first event charging resource after determining, based on the retransmission determining parameter, that the first charging request is not a retransmitted create request for the first event charging resource. The retransmission determining parameter may be a globally unique dedicated identifier, or may be a combination of a user identifier and a service-specific identifier. The service-specific identifier is unique only in the user domain.

Step 504: The CHF apparatus 207 sends a first charging response for the first charging request to the CTF apparatus 101, where the first charging response carries an identifier of the first event charging resource.

Optionally, if the first charging request does not carry the first event charging processing mode, the first charging response further carries the first event charging processing mode determined by the CHF apparatus 207, for example, direct deduction, event quota application, or offline event reporting.

Step 505: The CTF apparatus 101 sends the second charging request to the CHF apparatus 207, to request to refund a deduction amount of the first charging request.

The second charging request may be the create request for the second event charging resource, or an update request for the first event charging resource, or a deletion request for the first event charging resource.

When the first event processing mode is the direct deduction, the CTF apparatus 101 determines that the event charging service fails to be performed, and the CTF apparatus 101 sends the second charging request for the event charging service. The second charging request may be the create request for the second event charging resource, or the update request for the first event charging resource, or the deletion request for the first event charging resource. Preferably, the second charging request is the create request for the second event charging resource. The second charging request includes the second event charging processing mode and the identifier of the first event charging resource, and the second event processing mode is refund. The second event charging processing mode is used to indicate to refund the deduction amount in the direct deduction performed by using the first charging request. The identifier of the first event charging resource is used to determine the deduction amount in the direct deduction performed by using the first charging request.

For example, if the event charging service fails to be performed and the first event charging processing mode is the direct deduction, the second charging request may be as follows:

```
          Charging Create Request
           {
              oneEventCharging: true
              eventCHMethod: refund }
```

Herein, "charging create request" indicates that the second charging request is a resource create request. The second charging request carries the parameter of one-time event charging "oneEventcharging", and the parameter of one-time event charging is used to indicate whether there is a subsequent event charging request. A value of oneEventcharging is true, indicating that there is no subsequent resource update charging request or resource deletion charging request. The resource update charging request further carries the second event charging processing mode "eventCHMethod". A value of the second event charging processing mode is refund, indicating that the event charging processing mode is refund.

Step 506: The CHF apparatus 207 performs charging processing based on the second charging request, and returns a second charging response for the second charging request to the CTF apparatus 101.

The second charging request may be an update request or a deletion request for the first event charging resource, and includes the second event charging processing mode. The second event charging processing mode is refund. The second event processing mode indicates the CHF apparatus 207 to refund the deduction amount in the direct deduction performed by using the first charging request. The CHF apparatus 207 determines the deduction amount in the direct deduction performed by using the first charging request, and refunds the deduction amount to the account balance of the user. In addition, the CHF apparatus 207 further releases the first event charging resource based on the second charging request. The response for the second charging request is a result of a refund operation.

In another implementation, the second charging may be the create request for the second event charging resource, the second charging request carries a second event charging processing mode and the identifier of the first event charging resource, and the second event charging processing mode is refund, and is used to indicate the CHF apparatus 207 to refund the deduction amount in the direct deduction performed by using the first charging request. The second charging request may further carry the indication parameter of one-time event charging. The CHF apparatus 207 creates the second event charging resource based on the second charging request, determines, based on the identifier of the first event charging resource, the deduction amount in the direct deduction performed by using the first charging request, and returns the deduction amount to the account balance of the user.

Optionally, the second charging request further includes a retransmission determining parameter. After determining, based on the retransmission determining parameter, that the second charging request is not a retransmitted create request for the second event charging resource, the CHF apparatus 207 creates the second event charging resource.

Step 507: The CTF apparatus 101 sends a third charging request to the CHF apparatus 207.

When the first charging request is a resource create request, and the first charging processing mode is the event quota application, the CTF apparatus further sends the third charging request to the CHF after completing execution of the event charging service. The third charging request carries a third charging processing mode, that is, offline event reporting.

The third charging request may be a resource update request or a resource deletion request. The third charging request may further include the identifier of the first event charging resource.

Step 508: The CHF apparatus 207 performs charging processing based on the second charging request, and returns a third charging response for the third charging request to the CTF apparatus 101.

After receiving the third charging request, the CHF apparatus 207 generates a CDR according to the third charging processing mode. Then, the CHF apparatus 207 returns the third charging response to the CTF apparatus.

According to the foregoing method, the CHF apparatus 207 may implement event charging by using a converged charging system, so that a method for processing event charging by the CTF is consistent with a method for processing event charging by the charging system, to avoid mismatch between processing performed by the charging system and processing performed by the CTF on a service, and further prevent a loss of an operator or impact on service experience of the user.

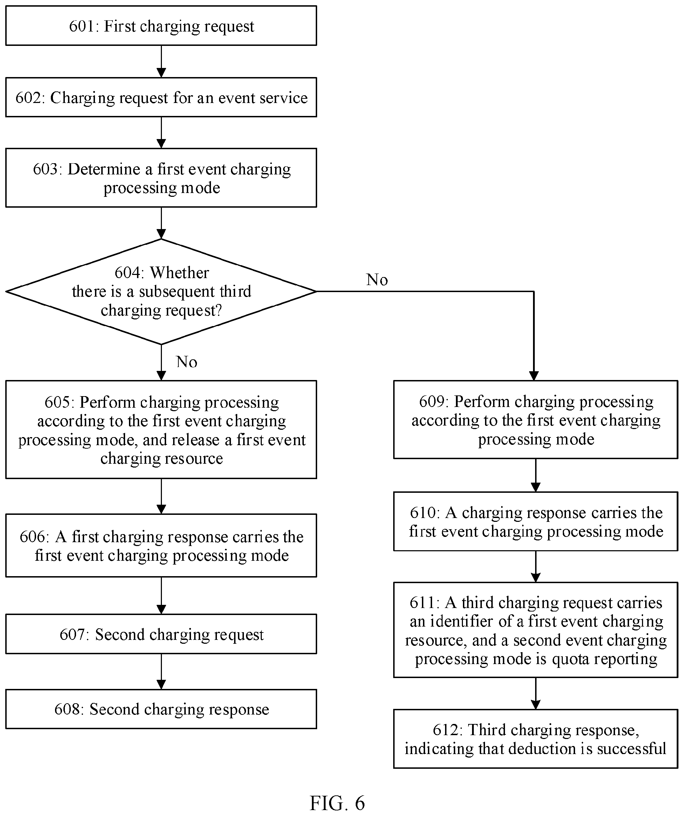

FIG. 6 is a detailed flowchart of corresponding processing performed by a CHF apparatus 207 after the CHF apparatus 207 receives a charging request sent by a CTF apparatus 101 according to an embodiment of this application. In this embodiment, a first charging request sent by the CTF apparatus 101 does not carry an event charging processing mode, and the CHF apparatus 207 determines the event charging processing mode based on user information and/or service information. A procedure corresponding to FIG. 6 includes the following steps:

Step 601: A CHF apparatus 207 receives a first charging request sent by a CTF apparatus 101. For the first charging request, refer to the description in step 502.

In an example, the first charging request may be a create request for a first event charging resource, which is as follows:

```
          Charging Create Request
           {
              oneEventCharging: true
              }
```

Herein, "charging create request" indicates that the message is the first charging request. The first charging request carries a parameter of one-time charging "oneEventcharging", and the parameter of one-time charging is used to indicate whether there is a subsequent third charging request. If a value of "oneEventcharging" is true, it indicates that there is no subsequent third charging request. The third charging request is a resource update charging request or a resource deletion charging request.

In an optional manner, the first charging request may further carry an event identifier and/or an event quantity. The CTF apparatus 101 allocates an event identifier to each type of charging event of each service. That is, the event identifier indicates a type of the event. For example, an event identifier allocated to a network capability API for querying user status is NEF_GetUserStatus. The event quantity indicates a quantity of times of occurrence of the event. For example, when the event quantity is 3, it indicates that the network capability of the user status is queried for three times. If a charging request does not carry event data, it indicates that a quantity of times of occurrence of the event is 1. An example of resource event charging resource creation carrying the event identifier and the event quantity is as follows:

```
          Charging Create Request
           {
                Multiple Unit Usage
                      Requested Unit
                             EventID: NEF_GetUserStatus
                             EventNum: 1 }
```

Herein, "Eent ID: NEF_GetUserStatus" indicates that the event identifier is NEF_GetUserStatus. Herein, "EventNum: 1" indicates that the quantity of times that the event is used is 1.

Step 602: The CHF apparatus 207 determines that the first charging request is a charging request for an event service.

The first charging request carries indication information indicating event charging, and the CHF apparatus 207 determines, based on the indication information indicating event charging, that the first charging request is the charging request for the event service. Therefore, it is determined that the CHF apparatus 207 needs to determine a first event charging processing mode for the first charging request. The indication information indicating event charging may be a dedicated identifier, or may be any event charging parameter (for example, an event service identifier, an indication parameter of one-time event charging, an indication parameter of non-one-time event charging, and an event charging processing mode).

In an example, the CHF apparatus 207 may determine, based on oneEventcharging (that is, a one-time charging request parameter), that the first charging request is the charging request for the event service. Alternatively, the first charging request carries an event service identifier (for example, an event ID), and the CHF apparatus 207 determines, based on the event service identifier, that the first charging request is the charging request for the event service.

Step 603: The CHF apparatus 207 determines the first event charging processing mode based on the first charging request.

The CHF apparatus 207 may determine the first event charging processing mode of the first charging request based on a user identifier, a parameter of a service type, or a parameter of a service status in the first charging request. For example, the first charging request carries the service status parameter indicating the service status. If the service status is before the service occurs, charging processing performed by the CHF apparatus 207 is direct deduction. If the service state is after the service occurs, charging processing performed by the CHF apparatus 207 is generating a CDR. In an example, the parameter of the service status may be a service request or a service response. The CHF apparatus 207 may determine, for the service request based on the parameter of the service status, that an event charging service status is before the service occurs. The CHF apparatus 207 may determine, for the service response based on the parameter of the service status, that the event charging service status is after the service occurs.

Optionally, the CHF apparatus 207 may further obtain the user information based on the user identifier in the first charging request, determine that the user of the charging request is a prepaid user, determine that the first event charging processing mode is direct deduction, and perform the direct deduction on the charging request. Alternatively, the CHF apparatus 207 may determine that the user of the charging request is a postpaid user, determine that the first event charging processing mode is offline event reporting, and generate the CDR based on the charging request.

Optionally, the CHF apparatus 207 may further determine the event charging processing mode based on an indication parameter of one-time event charging included in event charging information. Specifically, if the event charging information includes the indication parameter of one-time event charging, it indicates that the first charging request has a subsequent third charging request, and the CHF apparatus determines that the first event charging processing mode is event quota application.

Step 604: The CHF apparatus 207 determines whether the first charging request is a one-time charging request. If the first charging request is the one-time charging request, step 605 is performed. If the first charging request is not the one-time charging request, step 609 is performed.

The first charging request carries the parameter of one-time event charging (for example, oneEventCharging). If a value of the parameter of one-time event charging is true, the CHF apparatus 207 determines that the first charging request is the one-time charging request, that is, the event charging service has no subsequent third charging request. If a value of the parameter of one-time event charging is false, the CHF apparatus 207 determines that the first charging request is a non-one-time charging request, that is, the event charging service has a subsequent third charging request.

That the first charging request carries the parameter of one-time event request and indicates that the first charging request is the non-one-time charging request may be the following example:

```
          Charging Create Request
           { Multiple Unit Usage
                Requested Unit
                      EventID: NEF_GetUserStatus
                      EventNum: 1
              oneEventCharging: false
              }
```

Herein, charging create request indicates that the message is a create request for an event charging resource. Herein, "Multiple Unit Usage" indicates usage of a service unit. For example, the event ID indicates an event identifier, and NEF_GetUserStatus indicates that the event identifier is NEF_GetUserStatus. EventNum indicates that, for the event charging service, a quantity of times of occurrence of the event is 1. Herein, the parameter of one-time charging "oneEventcharging" carried in the resource event charging resource creation is used to indicate whether there is a subsequent charging request. If a value of "oneEventcharging" is false, it indicates that there is a subsequent resource update charging request or resource deletion charging request, that is, the first charging request is a non-one-time charging request.

Step 605: The CHF apparatus 207 performs charging processing according to the determined first event charging processing mode.

If the first event charging processing mode is direct deduction, the CHF apparatus 207 performs rating based on the first charging request, and performs deduction from an account balance of a user based on a rating result. Rating means that if a credit balance of the user is sufficient, the CHF calculates a quantity of monetary units representing a price, and deducts a calculated amount from the account balance of the user based on the requested quantity of units or internal units.

If the first event charging processing mode is the offline event reporting, an event charging data record is generated based on the first charging request.

If the first event charging processing mode is the event quota application, rating is performed based on the event charging information, and an event quota is granted based on the rating.

Because the first charging request is the one-time charging request, after performing charging processing on the first charging request, the CHF apparatus 207 further needs to release the first event charging resource.

Step 606: The CHF apparatus 207 returns a first charging response for the first charging request to the CTF apparatus.

The first charging response carries the first event charging processing mode determined by the CHF apparatus. The first event charging processing mode determined by the CHF apparatus 207 is the direct deduction or the CDR generation.

The first charging response further carries an event resource identifier created by the CHF apparatus 207. A first event resource identifier is carried in a message header of a resource create charging response.

The resource create charging response may be as follows:

```
          Charging Create Response
           {
               EventChargingHandling: {Debit or Record}
```

Herein, "Charging Create Response" indicate to create a charging response for a resource. Herein, the "EventChargingHandling" parameter carries the first event charging processing mode determined by the CHF apparatus 207, where "Debit" indicates that the charging processing mode determined by the CHF apparatus 207 is the direct deduction. Herein, "Record" indicates that the charging processing mode determined by the CHF is generating CDR, and the charging processing mode corresponds to the offline event reporting.

Step 607: The CHF apparatus 207 receives a second charging request sent by the CTF apparatus 101.

When the first event charging processing mode is the direct deduction, after receiving the first charging response, the CTF apparatus 101 determines that the event charging service fails to be performed, and the CTF apparatus 101 sends the second charging request for the event charging service. The second charging request includes indication information used to indicate to refund the deduction amount in the direct deduction performed by using the first charging request and an identifier of the first event charging resource, and the identifier of the first event charging resource is used to determine the deduction amount in the direct deduction performed by using the first charging request.

For a specific description of the second charging request, refer to the description of step 505. Details are not described again in this embodiment of this application.

Step 608: The CHF apparatus 207 returns a second charging response for the second charging request to the CTF apparatus, where the charging response carries the charging processing mode determined by the CHF apparatus 207. The charging processing mode determined by the CHF apparatus 207 is the direct deduction or the event quota application.

For a description of step 608, refer to step 506. Details are not described herein in this embodiment of the present invention.

Step 609: The CHF apparatus 207 performs charging processing according to the first event charging processing mode carried in the first charging request.

The first event charging processing mode is the event quota application. Specifically, rating is performed based on the event charging information, a first event charging resource quota is granted based on the rating, and the identifier of the first event charging resource is allocated based on the rating.

Step 610: The CHF apparatus 207 returns a first charging response for the first charging request to the CTF apparatus.

The first charging response carries the first event charging processing mode determined by the CHF apparatus. The first event charging processing mode determined by the CHF apparatus is quota granting. The first charging response further carries the first event resource identifier created by the CHF apparatus 207. The event resource identifier is carried in a message header of a resource create charging response.

Step 611: The CHF apparatus 207 receives the third charging request sent by the CTF apparatus 101.

After completing execution of the event charging service, the CTF apparatus sends the third charging request to the CHF apparatus 207. The second charging request may be an update request or a deletion request for the first event charging resource. The third charging request carries the first event resource identifier.

In addition, the second charging request may further carry a second event processing mode, and the second event processing mode is quota use reporting. The CHF apparatus 207 generates an event charging data record according to the second event processing mode.

Step 612: The CHF apparatus 207 returns a third charging response for the third charging request to the CTF apparatus.

In an optional manner, the charging request in step 601 or 607 may further carry a retransmission determining parameter. After it is determined, based on the retransmission determining parameter, that a resource event charging resource is not a retransmitted resource create request, the first event charging resource or the second event charging resource is created based on the charging request. The retransmission determining parameter may be a retransmission identifier, an event identifier, a message identifier of a previous charging request, or the like. After receiving the charging request that carries the retransmission determining parameter, the CHF apparatus 207 returns a processing result for the previous charging request to the CTF apparatus based on the retransmission determining parameter. Further, after determining that the previous charging request is processed successfully, the CHF apparatus 207 returns the processing result for the previous charging request, or after determining that the previous charging request fails to be processed, the CHF apparatus 207 processes the charging request that carries the retransmission determining parameter, and returns the processing result.

According to the method, the CHF apparatus 207 may determine the first event charging processing mode based on the first charging request, to avoid a mismatch between processing performed by the charging system and processing performed by the CTF on a service, and further prevent a loss of an operator or impact on service experience of the user.

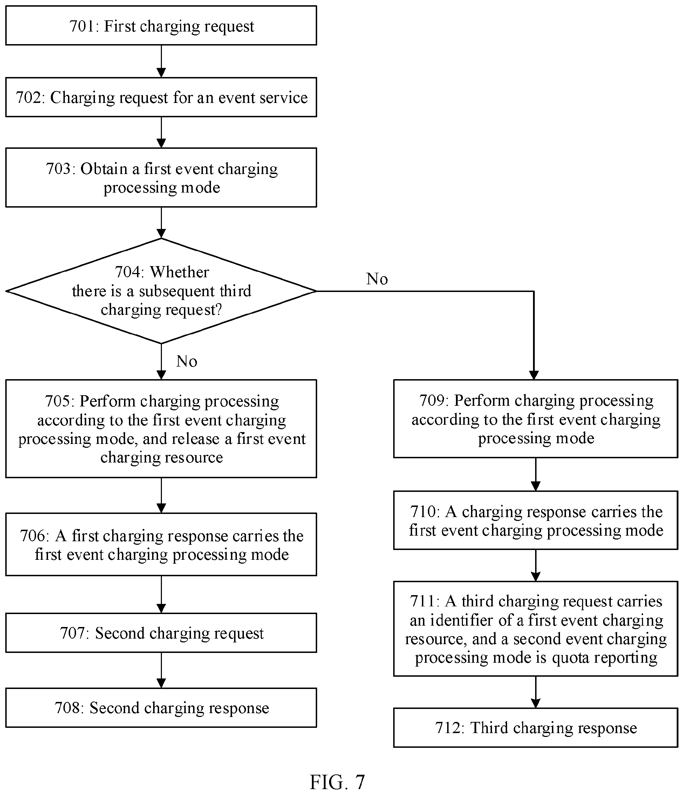

FIG. 7 is a detailed flowchart of corresponding processing performed by a CHF apparatus 207 after the CHF apparatus 207 receives a charging request sent by a CTF apparatus 101 according to an embodiment of this application. In this embodiment, a first charging request sent by the CTF apparatus 101 carries a first event charging processing mode, and the CHF apparatus 207 determines the first event charging processing mode according to the first event charging processing mode carried in the first charging request. A procedure corresponding to FIG. 7 includes the following steps:
Step 601: A CHF apparatus 207 receives a first charging request sent by a CTF apparatus 101. For the first charging request, refer to the description in step 502.

In an example, the first charging request may be a create request for a first event charging resource, which is as follows:

```
          Charging Create Request
           {
               oneEventCharging: true
               eventCHMethod:debit
              }
```

Herein, "charging Create request" indicates that the first charging request is a charging resource create request. The first charging request carries a parameter of one-time charging "oneEventcharging", and the parameter of one-time charging is used to indicate whether there is a subsequent third charging request. If a value of "oneEventcharging" is true, it indicates that there is no subsequent third charging request. The third charging request is a resource update charging request or a resource deletion charging request. Herein, "eventCHMethod" is the first event charging processing mode, and a value of the first event charging processing mode can be direct deduction (debit), offline event reporting (record), or event quota application (reserve).

In an optional manner, the first charging request may further carry an event identifier and/or an event quantity. For an example, refer to the description of step 601.

Step 702: The CHF apparatus 207 determines that the first charging request is a charging request for an event service. For a detailed description of step 702, refer to the description of step 602. Details are not described herein in this embodiment of the present invention.

Step 703: The CHF apparatus 207 determines the first event charging processing mode based on the first charging request.

The first charging request carries the first event charging processing mode, and the CHF apparatus 207 determines the first event charging processing mode based on the first charging request.

Step 704: The CHF apparatus 207 determines whether the first charging request is a one-time charging request. If the first charging request is the one-time charging request, step 705 is performed. If the first charging request is not the one-time charging request, step 709 is performed.

For detailed descriptions of step 704, refer to step 604. Details are not described herein again in this embodiment of this application.

Step 705: The CHF apparatus performs charging processing according to the determined first event charging processing mode. For a detailed description of step 705, refer to step 605. Details are not described herein again in this embodiment of this application.

Step 706: The CHF apparatus 207 returns a first charging response for the first charging request to the CTF apparatus.

The first charging response carries the event resource identifier created by the CHF apparatus 207. A first event resource identifier is carried in a message header of a resource create charging response.

Step 707: The CHF apparatus 207 receives a second charging request sent by the CTF apparatus 101. For detailed descriptions of step 707, refer to step 607. Details are not described herein again in this embodiment of this application.

Step 708: The CHF apparatus 207 returns a second charging response for the second charging request to the CTF apparatus.

For a description of step 708, refer to step 506. Details are not described herein in this embodiment of the present invention.

Step 709: The CHF apparatus 207 performs charging processing according to the first event charging processing mode carried in the first charging request.

The first event charging processing mode is the event quota application. Specifically, rating is performed based on the event charging information, a first event charging resource quota is granted based on the rating, and the identifier of the first event charging resource is allocated based on the rating.

Step 710: The CHF apparatus 207 returns a first charging response for the first charging request to the CTF apparatus.

The first charging response carries the first event resource identifier created by the CHF apparatus 207. The event resource identifier is carried in a message header of a resource create charging response.

Step 711: The CHF apparatus 207 receives the third charging request sent by the CTF apparatus 101. For detailed descriptions of step 711, refer to step 611. Details are not described herein again in this embodiment of this application.

Step 712: The CHF apparatus 207 returns a third charging response for the third charging request to the CTF apparatus.

In an optional manner, the charging request in step 601 or 607 may further carry a retransmission determining parameter. After it is determined, based on the retransmission determining parameter, that a resource event charging resource is not a retransmitted resource create request, the first event charging resource or the second event charging resource is created based on the charging request. The retransmission determining parameter may be a retransmission identifier, an event identifier, a message identifier of a previous charging request, or the like. After receiving the charging request that carries the retransmission determining parameter, the CHF apparatus 207 returns a processing result for the previous charging request to the CTF apparatus based on the retransmission determining parameter. Further, after determining that the previous charging request is processed successfully, the CHF apparatus 207 returns the processing result for the previous charging request, or after determining that the previous charging request fails to be processed, the CHF apparatus 207 processes the charging request that carries the retransmission determining parameter, and returns the processing result.

According to the method, the CHF apparatus 207 may implement charging of the event charging service by using a converged charging system. The first charging request carries the first event charging processing mode, and the CHF apparatus 207 may directly perform processing according to the first event charging processing mode. This avoids a mismatch between processing performed by the charging system and processing performed by the CTF on a service, and further prevents a loss of an operator or impact on service experience of the user.

The foregoing mainly describes the solutions provided in the embodiments of this application from a perspective of interaction between network elements. It may be understood that, to implement the foregoing functions, devices such as the charging function apparatus and the charging trigger function apparatus include corresponding hardware structures and/or software modules for performing the functions. A person skilled in the art should easily be aware that, in combination with modules and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function module division may be performed on devices such as the CTF apparatus 101 and the CHF apparatus 207 based on the foregoing method examples. For example, each function module may be obtained through division corresponding to each function, or two or more functions may be integrated into one processing module. The integrated module may be implemented in a form of hardware, or may be implemented in a form of a software functional module. It should be noted that, in the embodiments of this application, module division is an example, and is merely a logical function division. In an actual implementation, another division manner may be used.

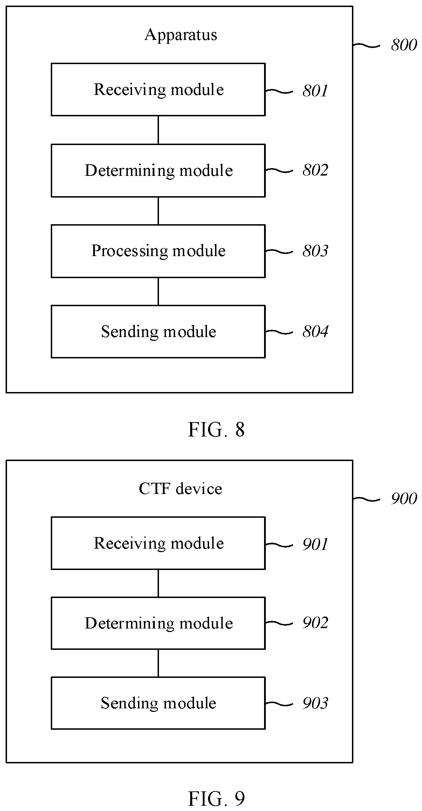

For example, when the function modules are obtained through division in an integrated manner, FIG. 8 is a schematic diagram of a structure of an apparatus 800. The apparatus 800 may be the charging function apparatus 207 in the foregoing embodiments, or may be a chip in the charging function apparatus 207. This is not specifically limited in the embodiments of this application. As shown in FIG. 8, the apparatus includes a receiving module 801, a determining module 802, a processing module 803, and a sending module 804.

The receiving unit 801 is configured to receive a first charging request sent by a charging trigger function CTF apparatus, where the first charging request carries event charging information. The determining unit 802 is configured to determine a first event charging processing mode based on the event charging information. The processing unit 803 is configured to process the first charging request according to the first event charging processing mode.

Optionally, the event charging information includes indication information indicating event charging, and the determining unit 802 is further configured to determine, based on the event charging indication information, that the first charging request is a charging request for an event service.

Optionally, the first charging request is a create request for a first event charging resource, and the event charging information further includes an indication parameter of one-time event charging.

The determining module 802 is further configured to determine, based on the indication parameter of one-time event charging, that the first charging request is a one-time event charging request, the processing module 803 is further configured to create the first event charging resource based on the first charging request, and the determining module is further configured to determine that the first event charging resource has no second charging request.

Alternatively, the determining module 802 is further configured to determine, based on the indication parameter of one-time event charging, that the first charging request is a non-one-time event charging request, the processing module 803 is further configured to create the first event charging resource based on the first charging request, and the determining module 802 is further configured to determine that the first event charging resource has a second charging request.

Optionally, the first charging request carries a user identifier, the event charging information further includes a parameter indicating a service type, and that the determining module 802 determines a first event charging processing mode based on the event charging information includes: obtaining user information based on the user identifier; and determining the first event charging processing mode based on the indication information indicating event charging, the user information, and/or the parameter indicating the service type, where the first event charging processing mode is direct deduction, offline event reporting, or event quota application.

Optionally, after the determining module 802 determines, based on the indication parameter of one-time event charging, that the first charging request is the non-one-time event charging request, that the determining module 802 determines an event charging processing mode based on the event charging information includes: determining that the first event charging processing mode is event quota application.

Optionally, the first event charging processing mode is the direct deduction, and that the processing module 803 processes the first charging request according to the first event charging processing mode includes: performing rating on the first charging request, and performing deduction from an account balance of a user based on a rating result.

Optionally, the first event charging processing mode is the offline event reporting, and that the processing module 803 processes the first charging request according to the first event charging processing mode includes: generating an event charging data record based on the first charging request.

Optionally, the first event charging processing mode is the event quota application, and that the processing module 803 processes the first charging request according to the first event charging processing mode includes: performing rating based on the event charging information, and granting an event quota based on the rating.

Optionally, the CHF apparatus 207 further includes the sending module, configured to return a charging response for the first charging request to the CTF apparatus 101, where the charging response carries the determined first event charging processing mode.

Optionally, the event charging processing mode is the direct deduction, and after processing the first charging request,
the receiving module 801 further receives a second charging request for the event charging service, where the second charging request includes a second event charging processing mode and an identifier of the first event charging resource, the second event charging processing mode is refund, and is indication information used to indicate to refund a deduction amount in the direct deduction performed by using the first charging request, and the identifier of the first event charging resource is obtained from a charging response for the first charging request.

The determining module 802 is further configured to determine, based on the identifier of the first event charging resource, the deduction amount in the direct deduction performed by using the first charging request.

The processing module 803 is further configured to refund the deduction amount to the account balance of the user.

Optionally, the second charging request is a create request for a second event charging resource, the second charging request carries an indication parameter of one-time event charging, and the processing module 803 is further configured to create the second event charging resource based on the second charging request.

Optionally, the second charging request is an update request for the first event charging resource, and the processing module 803 is further configured to release the first event charging resource based on the second charging request.

Optionally, the second charging request is a release request for the first event charging resource, and the processing module 803 is further configured to release the first event charging resource based on the second charging request.

Optionally, the first charging request further includes a retransmission determining parameter, where the determining module 802 is further configured to determine, based on the retransmission determining parameter, that the first charging request is not a retransmitted create request for the first event charging resource. The processing module 803 is further configured to create the first event charging resource.

Optionally, the second charging request further includes a retransmission determining parameter, where the determining module 802 is further configured to determine, based on the retransmission determining parameter, that the second charging request is not a retransmitted create request for the second event charging resource. The processing module 803 is further configured to create the second event charging resource.

Optionally, the charging request further carries an event identifier and/or an event quantity, and that the processing module 803 processes the first charging request includes: processing the first charging request based on the event identifier and/or the event quantity.

FIG. 9 is a schematic structural diagram of a CTF apparatus 900. The CTF apparatus 900 may be the charging trigger function apparatus 101 in the foregoing embodiments, or may be a chip in the charging trigger function apparatus 101. This is not specifically limited in the embodiments of this application. As shown in FIG. 9, the CTF apparatus includes a receiving module 901, a determining module 902, and a sending module 903.

The determining module 902 is configured to determine that a charging event of an event charging service occurs; the sending module 903 is configured to send a first charging request to a charging function CHF apparatus 207, where the first charging request carries event charging information, and the event charging information is used to determine an event charging processing mode; and the receiving module 901 is configured to receive a first charging response that is of the first charging request and that is sent by the CHF apparatus, where the first charging response includes a result of processing the first charging request according to the determined event charging processing mode.

Optionally, the first event charging processing mode is direct deduction, the first charging response includes an identifier of a first event charging resource created based on the first charging request, and after the receiving module 901 receives the first charging response sent by the CHF apparatus 207, the determining module 902 is further configured to determine that the event charging service fails to be performed.

The sending module 903 is further configured to send a second charging request for the event charging service, where the second charging request includes indication information used to indicate to refund a deduction amount in the direct deduction performed by using the first charging request and the identifier of the first event charging resource, and the identifier of the first event charging resource is used to determine the deduction amount in the direct deduction performed by using the first charging request.

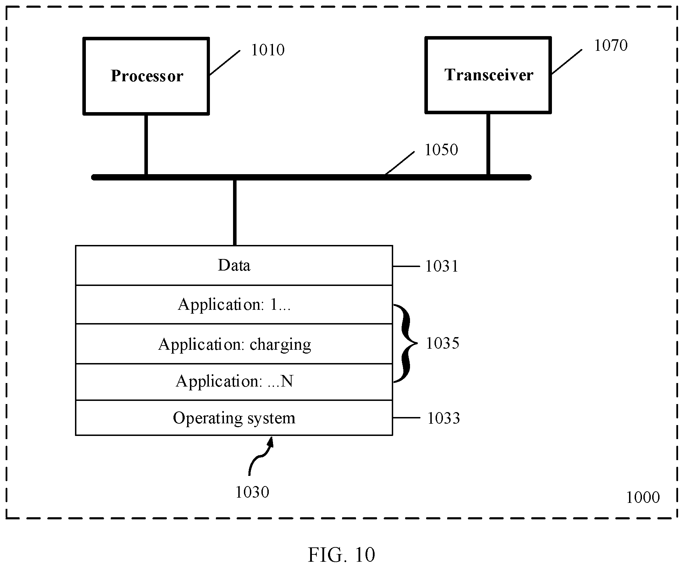

FIG. 10 is a schematic block diagram of an implementation of a charging trigger function apparatus or a charging function apparatus (which may be referred to as a charging device 1000 for short herein) according to an embodiment of this application. The charging device 1000 may include a processor 1010, a memory 1030, and a bus system 1050. The processor and the memory are connected through the bus system. The memory is configured to store instructions. The processor is configured to execute the instructions stored in the memory. The memory of the encoding device stores program code, and the processor may invoke the program code stored in the memory to perform various charging processing methods described in this application, for example, the processing steps described in the embodiments in FIG. 5 to FIG. 7. To avoid repetition, details are not described herein.

In this embodiment of this application, the processor 1010 may be a central processing unit (Central Processing Unit, "CPU" for short), or the processor 1010 may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor, or the like.

The memory 1030 may include a read-only memory (ROM) device or a random access memory (RAM) device. Any other storage device of an appropriate type may alternatively be used as the memory 1030. The memory 830 may include code and data 1031 accessed by the processor 1010 through the bus 1050. The memory 1030 may further include an operating system 1033 and an application program 1035. The application program 1035 includes at least one program that allows the processor 1010 to perform the charging method described in this application. For example, the application program 1035 may include applications 1 to N, and further include a charging application (a charging application for short) that performs the charging method described in this application.

The bus system 1050 may further include a power bus, a control bus, a status signal bus, and the like in addition to a data bus. However, for clear description, various types of buses in the figure are marked as the bus system 1050.

Optionally, the charging device 1000 may further include one or more input/output devices, such as a transceiver 1070. The transceiver 1070 is configured to communicate with another network function apparatus.

A person skilled in the art can understand that the functions described with reference to various illustrative logical blocks, modules, and algorithm steps disclosed and described in this specification can be implemented by hardware, software, firmware, or any combination thereof. If the embodiments are implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or a communications medium including any medium that facilitates transfer of a computer program from one place to another (for example, according to a communication protocol). In this manner, the computer-readable medium may generally correspond to: (1) a non-transitory tangible computer-readable storage medium, or (2) a communications medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

In an example but not a limitation, such computer-readable storage media may include a RAM, a ROM, an EEPROM, a CD-ROM or another compact disc storage apparatus, a magnetic disk storage apparatus or another magnetic storage apparatus, a flash memory, or any other medium that can be used to store desired program code in a form of instructions or a data structure and that is accessible by a computer. In addition, any connection is properly referred to as a computer-readable medium. For example, if instructions are transmitted from a website, a server, or another remote source through a coaxial cable, an optical fiber, a twisted pair, a digital subscriber line (DSL), or wireless technologies such as infrared, radio, and microwave, the coaxial cable, the optical fiber, the twisted pair, the DSL, or the wireless technologies such as infrared, radio, and microwave are included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (CD), a laser disc, an optical disc, a digital versatile disc (DVD), and a Blu-ray disc. The disks usually reproduce data magnetically, whereas the discs reproduce data optically with lasers. Combinations of the foregoing items should also be included in the scope of the computer-readable media.

Instructions may be executed by one or more processors such as one or more digital signal processors (DSP), general-purpose microprocessors, application-specific integrated circuits (ASIC), field programmable gate arrays (FPGA), or other equivalent integrated or discrete logic circuits. Therefore, the term "processor" used in this specification may be any one of the foregoing structures or any other structure suitable for implementing the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be fully implemented in one or more circuits or logic elements.

The technologies in this application may be implemented in various apparatuses or devices, including an integrated circuit (IC) or a group of ICs (for example, a chip set). Various components, modules, or units are described in this application to emphasize function aspects of the apparatuses configured to perform the disclosed technologies, but are not necessarily implemented by different hardware units. Actually, as described above, various units may be combined into a codec hardware unit in combination with appropriate software and/or firmware, or may be provided by interoperable hardware units (including the one or more processors described above).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method, comprising:
receiving a first charging request sent by a charging trigger function CTF apparatus, wherein the first charging request carries event charging information;
determining a first event charging processing mode based on the event charging information; and
processing the first charging request according to the first event charging processing mode.

2. The method according to claim 1, wherein the event charging information comprises indication information indicating event charging, and the method further comprises:
determining, based on the event charging indication information, that the first charging request is a charging request for an event service.

3. The method according to claim 1 or 2, wherein the first charging request is a create request for a first event charging resource, the event charging information further comprises an indication parameter of one-time event charging, and the method further comprises:
determining, based on the indication parameter of one-time event charging, that the first charging request is a one-time event charging request, creating the first event charging resource based on the first charging request, and determining that the first event charging resource has no third charging request; or
determining, based on the indication parameter of one-time event charging, that the first charging request is a non-one-time event charging request, creating the first event charging resource based on the first charging request, and determining that the first event charging resource has a third charging request.

4. The method according to any one of claims 1 to 3, wherein the event charging information further comprises the first event charging processing mode, and the event charging processing mode is direct deduction, offline event reporting, or event quota application.

5. The method according to claim 2 or 3, wherein the first charging request carries a user identifier, the event charging information further comprises a parameter indicating a service type, and the determining a first event charging processing mode based on the event charging information specifically comprises:
obtaining user information based on the user identifier; and
determining the first event charging processing mode based on the indication information indicating event charging, the user information, and the parameter indicating the service type, wherein the first event charging processing mode is direct deduction, offline event reporting, or event quota application.

6. The method according to claim 3, wherein after the determining, based on the indication parameter of one-time event charging, that the first charging request is a non-one-time event charging request, the determining an event charging processing mode based on the event charging information comprises:
determining that the first event charging processing mode is event quota application.

7. The method according to any one of claims 3 to 6, wherein
the first event charging processing mode is the direct deduction, and the processing the first charging request according to the first event charging processing mode comprises: performing rating based on the first charging request, and performing deduction from an account balance of a user based on a rating result; or
the first event charging processing mode is the offline event reporting, and the processing the first charging request according to the first event charging processing mode comprises: generating an event charging data record based on the first charging request; or
the first event charging processing mode is the event quota application, and the processing the first charging request according to the first event charging processing mode comprises: performing rating based on the event charging information, and granting an event quota based on the rating.

8. The method according to claim 5 or 6, wherein the method further comprises:
returning a first charging response for the first charging request to the CTF apparatus, wherein the first charging response carries the determined first event charging processing mode.

9. The method according to claim 7, wherein the event charging processing mode is the direct deduction; and after the processing the first charging request, the method further comprises:
receiving a second charging request for the event charging service, wherein the second charging request comprises a second event charging processing mode and an identifier of the first event charging resource, the second event charging processing mode is refund, and is indication information used to indicate to refund a deduction amount in the direct deduction performed by using the first charging request, and the identifier of the first event charging resource is obtained from a charging response for the first charging request;
determining, based on the identifier of the first event charging resource, the deduction amount in the direct deduction performed by using the first charging request; and
refunding the deduction amount to the account balance of the user.

10. The method according to claim 9, wherein
the second charging request is a create request for a second event charging resource, the second charging request carries an indication parameter of one-time event charging, and the method further comprises: creating the second event charging resource based on the second charging request; or
the second charging request is an update request for the first event charging resource, and the method further comprises: releasing the first event charging resource based on the second charging request; or
the second charging request is a release request for the first event charging resource, and the method further comprises: releasing the first event charging resource based on the second charging request.

11. The method according to any one of claims 1 to 10, wherein the first charging request further comprises a retransmission determining parameter, and the method further comprises: after determining, based on the retransmission determining parameter, that the first charging request is not a retransmitted create request for the first event charging resource, creating the first event charging resource.

12. The method according to claim 9 or 10, wherein the second charging request further comprises a retransmission determining parameter, and the method further comprises: after determining, based on the retransmission determining parameter, that the second charging request is not a retransmitted create request for the first event charging resource, creating the second event charging resource.

13. The method according to any one of claims 1 to 11, wherein the first charging request further carries an event identifier and/or an event quantity, and the processing the first charging request comprises:
processing the first charging request based on the event identifier and/or the event quantity.

14. A charging method, comprising:
determining that a charging event of an event charging service occurs;
sending a first charging request to a charging function CHF apparatus, wherein the first charging request carries event charging information, and the event charging information is used to determine an event charging processing mode; and
receiving a first charging response that is of the first charging request and that is sent by the CHF apparatus, wherein the first charging response comprises a result of processing the first charging request according to the determined event charging processing mode.

15. The method according to claim 14, wherein the event charging information comprises indication information indicating event charging, and the indication information indicating event charging is used to determine that the first charging request is a charging request for an event service.

16. The method according to claim 14 or 15, wherein the first charging request is a create request for a first event charging resource, the event charging information further comprises an indication parameter of one-time event charging, and after the indication parameter of one-time event charging indicates that the first event charging resource is created based on the first charging request, the first event charging resource has no subsequent charging request, or after the indication parameter of one-time event charging indicates that the first event charging resource is created based on the first charging request, the first event charging resource has a subsequent charging request.

17. The method according to any one of claims 14 to 16, wherein the event charging information further comprises the event charging processing mode, and the event charging processing mode is direct deduction, offline event reporting, or event quota application.

18. The method according to any one of claims 14 to 16, wherein the first charging request carries a user identifier, the event charging information further comprises a parameter indicating a service type, the user identifier and/or the parameter indicating the service type are/is used to determine the event charging processing mode, and the event charging processing mode is direct deduction, offline event reporting, or event quota application.

19. The method according to any one of claims 14 to 16 and 18, wherein the first charging response further comprises the event charging processing mode determined by the CHF.

20. The method according to any one of claims 14 to 18, wherein the first event charging processing mode is the direct deduction, the first charging response comprises an identifier of the first event charging resource created based on the first charging request, and after the receiving a first charging response sent by the CHF apparatus, the method further comprises:
determining that the event charging service fails to be performed; and
sending a second charging request for the event charging service, wherein the second charging request comprises indication information used to indicate to refund a deduction amount in the direct deduction performed by using the first charging request and the identifier of the first event charging resource, and the identifier of the first event charging resource is used to determine the deduction amount in the direct deduction performed by using the first charging request.

21. The method according to claim 20, wherein the second charging request is a create request for a second event charging resource, and the second charging request further carries an indication parameter of one-time event charging, or the second charging request message is an update request for the first event charging resource or a release request for the first event charging resource.

22. The method according to any one of claims 14 to 21, wherein the first charging request or the second charging request further comprises a retransmission determining parameter, and the retransmission determining parameter is used to determine that the first charging request is not a retransmitted create request for an event charging resource.

23. The method according to any one of claims 14 to 22, wherein the method further comprises:
determining a quantity of times of occurrence of the service event, wherein the first charging request further carries an event identifier and an event quantity.

24. A charging function CHF apparatus, comprising:
a receiving unit, configured to receive a first charging request sent by a charging trigger function CTF apparatus, wherein the first charging request carries event charging information;
a determining unit, configured to determine a first event charging processing mode based on the event charging information; and
a processing unit, configured to process the first charging request according to the first event charging processing mode.

25. The apparatus according to claim 24, wherein the event charging information comprises indication information indicating event charging, and the determining is further configured to determine, based on the event charging indication information, that the first charging request is a charging request for an event service.

26. The apparatus according to claim 24 or 25, wherein the first charging request is a create request for a first event charging resource, and the event charging information further comprises an indication parameter of one-time event charging, wherein
the determining module is further configured to determine, based on the indication parameter of one-time event charging, that the first charging request is a one-time event charging request, the processing module is further configured to create the first event charging resource based on the first charging request, and the determining module is further configured to determine that the first event charging resource has no third charging request; or
the determining module is further configured to determine, based on the indication parameter of one-time event charging, that the first charging request is a non-one-time event charging request, the processing module is further configured to create the first event charging resource based on the first charging request, and the determining module is further configured to determine that the first event charging resource has a third charging request.

27. The apparatus according to any one of claims 24 to 26, wherein the event charging information further comprises the first event charging processing mode, and the event charging processing mode is direct deduction, offline event reporting, or event quota application.

28. The apparatus according to claim 25 or 26, wherein the first charging request carries a user identifier, the event charging information further comprises a parameter indicating a service type, and that the determining module determines a first event charging processing mode based on the event charging information comprises:
obtaining user information based on the user identifier; and
determining the first event charging processing mode based on the indication information indicating event charging, the user information, and/or the parameter indicating the service type, wherein the first event charging processing mode is direct deduction, offline event reporting, or event quota application.

29. The apparatus according to claim 26, wherein after the determining module determines, based on the indication parameter of one-time event charging, that the first charging request is the non-one-time event charging request,
that the determining module determines an event charging processing mode based on the event charging information comprises: determining that the first event charging processing mode is event quota application.

30. The apparatus according to any one of claims 26 to 29, wherein
the first event charging processing mode is the direct deduction, and that the processing module processes the first charging request according to the first event charging processing mode comprises: performing rating on the first charging request, and performing deduction from an account balance of a user based on a rating result; or
the first event charging processing mode is the offline event reporting, and that the processing module processes the first charging request according to the first event charging processing mode comprises: generating an event charging data record based on the first charging request; or
the first event charging processing mode is the event quota application, and that the processing module processes the first charging request according to the first event charging processing mode comprises: performing rating based on the event charging information, and granting an event quota based on the rating.

31. The apparatus according to claim 28 or 29, wherein the apparatus further comprises a sending module, configured to return a charging response for the first charging request to the CTF apparatus, wherein the charging response carries the determined first event charging processing mode.

32. The apparatus according to claim 30, wherein the event charging processing mode is the direct deduction, and after processing the first charging request,
the receiving module further receives a second charging request for the event charging service, wherein the second charging request comprises a second event charging processing mode and an identifier of the first event charging resource, the second event charging processing mode is refund, and is indication information used to indicate to refund a deduction amount in the direct deduction performed by using the first charging request, and the identifier of the first event charging resource is obtained from a charging response for the first charging request;
the determining module is further configured to determine, based on the identifier of the first event charging resource, the deduction amount in the direct deduction performed by using the first charging request; and
the processing module is further configured to: refund the deduction amount to the account balance of the user.

33. The apparatus according to claim 32, wherein
the second charging request is a create request for a second event charging resource, the second charging request carries an indication parameter of one-time event charging, and the processing module is further configured to create the second event charging resource based on the second charging request; or
the second charging request is an update request for the first event charging resource, and the processing module is further configured to release the first event charging resource based on the second charging request; or
the second charging request is a release request for the first event charging resource, and the first event charging resource based on the second charging request.

34. The apparatus according to any one of claims 24 to 33, wherein the first charging request further comprises a retransmission determining parameter, wherein
the determining module is further configured to determine, based on the retransmission determining parameter, that the first charging request is not a retransmitted create request for the first event charging resource; and
the processing module is further configured to create the first event charging resource.

35. The apparatus according to claim 32 or 33, wherein the second charging request further comprises a retransmission determining parameter, wherein
the determining module is further configured to determine, based on the retransmission determining parameter, that the second charging request is not a retransmitted create request for the second event charging resource; and
the processing module is further configured to create the second event charging resource.

36. The apparatus according to any one of claims 24 to 33, wherein the first charging request further carries an event identifier and/or an event quantity, and that the processing module processes the first charging request comprises: processing the first charging request based on the event identifier and/or the event quantity.

37. A charging trigger function CTF apparatus, comprising:
a determining module, configured to determine that a charging event of an event charging service occurs;
a sending module, configured to send a first charging request to a charging function CHF apparatus, wherein the first charging request carries event charging information, and the event charging information is used to determine an event charging processing mode; and
a receiving module, configured to receive a first charging response that is of the first charging request and that is sent by the CHF apparatus, wherein the first charging response comprises a result of processing the first charging request according to the determined event charging processing mode.

38. The apparatus according to claim 37, wherein the event charging information comprises indication information indicating event charging, and the indication information indicating event charging is used to determine that the first charging request is a charging request for an event service.

39. The apparatus according to claim 37 or 38, wherein the first charging request is a create request for a first event charging resource, the event charging information further comprises an indication parameter of one-time event charging, and after the indication parameter of one-time event charging indicates that the first event charging resource is created based on the first charging request, the first event charging resource has no subsequent charging request; or
the first charging request is a create request for a first event charging resource, the first charging request is the create request for the first event charging resource, and the event charging information further comprises an indication parameter of one-time event charging, wherein
after the indication parameter of one-time event charging indicates that the first event charging resource is created based on the first charging request, the first event charging resource has no subsequent charging request, or after the indication parameter of one-time event charging indicates that the first event charging resource is created based on the first charging request, the first event charging resource has a subsequent charging request.

40. The apparatus according to any one of claims 37 to 39, wherein the event charging information further comprises the event charging processing mode, and the event charging processing mode is direct deduction, offline event reporting, or event quota application.

41. The apparatus according to any one of claims 37 to 39, wherein the first charging request carries a user identifier, the event charging information further comprises a parameter indicating a service type, the user identifier and/or the parameter indicating the service type are/is used to determine the event charging processing mode, and the event charging processing mode is direct deduction, offline event reporting, or event quota application.

42. The apparatus according to any one of claims 37 to 41, wherein the first event charging processing mode is the direct deduction, the first charging response comprises an identifier of the first event charging resource created based on the first charging request, and after the receiving module receives the first charging response sent by the CHF apparatus, the determining module is further configured to determine that the event charging service fails to be performed; and
the sending module is further configured to send a second charging request for the event charging service, wherein the second charging request comprises indication information used to indicate to refund a deduction amount in the direct deduction performed by using the first charging request and the identifier of the first event charging resource, and the identifier of the first event charging resource is used to determine the deduction amount in the direct deduction performed by using the first charging request.

43. The apparatus according to claim 42, wherein the second charging request is a create request for a second event charging resource, and the second charging request further carries an indication parameter of one-time event charging, or the second charging request is an update request for the first event charging resource or a release request for the first event charging resource.

44. The apparatus according to any one of claims 37 to 43, wherein the first charging request or the second charging request further comprises a retransmission determining parameter, and the retransmission determining parameter is used to determine that the first charging request is not a retransmitted create request for an event charging resource.

45. The apparatus according to claim 42 or 43, wherein the second charging request further comprises a retransmission determining parameter, and the retransmission determining parameter is used to determine that the second charging request is not a retransmitted create request for an event charging resource.

46. The apparatus according to any one of claims 37 to 45, wherein the determining module is further configured to determine a quantity of times of occurrence of the service event, and the first charging request further carries an event identifier and an event quantity.

47. A charging method, comprising:
determining, by a charging trigger function CTF apparatus, that a charging event of an event charging service occurs;
sending, by the CTF apparatus, a first charging request to a charging function CHF apparatus, wherein the first charging request carries event charging information, and the event charging information is used to determine an event charging processing mode;
determining, by the CHF apparatus, a first event charging processing mode based on the event charging information; and
processing, by the CHF apparatus, the first charging request according to the first event charging processing mode.

48. A system, comprising the charging function CHF apparatus configured to perform any one of claims 24 to 26, and the charging trigger function CTF apparatus configured to perform any one of claims 38 to 46.
